# EUROPÄISCHE PATENTSCHRIFT

(11) **EP 0 866 391 B1**
(45) Veröffentlichungstag und Bekanntmachung des Hinweises auf die Patenterteilung: **21.12.2005**
(21) Anmeldenummer: 98103992.8
(22) Anmeldetag: 06.03.1998
(51) Int. Cl.: G05B 19/418, H04B 3/54

(54) **Verfahren und Vorrichtung zur Übertragung von Daten zwischen einer Positionsmesseinrichtung und einer Auswerteeinheit**
Method and device for transmission of data between a position sensing device and a processing unit
Méthode et dispositif pour la transmission de données entre un appareil de mesure de position et une unité de traitement

(30) Priorität: 18.03.1997 DE 19711216
(43) Veröffentlichungstag der Anmeldung: 23.09.1998
(73) Patentinhaber: Dr. Johannes Heidenhain GmbH, 83292 Traunreut (DE)
(72) Erfinder: Hagl, Rainer, Dr., 83352 Altenmarkt (DE)

(56) Entgegenhaltungen:
- EP-A- 0 128 959
- EP-A- 0 660 209
- WO-A-94/18803
- DE-A- 4 225 081

## Beschreibung

Die vorliegende Erfindung betrifft ein Verfahren sowie eine Vorrichtung zur Übertragung von Daten zwischen einer Positionsmeßeinrichtung und einer nachgeordneten Auswerteeinheit.

Herkömmliche Positionsmeßeinrichtungen zur Bestimmung der Position zweier relativ zueinander beweglicher Teile, beispielsweise an einer Werkzeugmaschine, werden in der Regel über eine bestimmte Anzahl von Signalübertragungsleitungen mit einer nachgeordneten Auswerteeinheit, etwa einer numerischen Steuerung, verbunden. Grundsätzlich ist man nunmehr bei der Übertragung verschiedenster Signale zwischen der Positionsmeßeinrichtung und der nachgeordneten Auswerteeinheit bestrebt, die Anzahl erforderlicher Signalübertragungsleitungen möglichst gering zu halten. Neben der Vermeidung unnötigen Verkabelungsaufwandes soll auch bei der Übertragung gegebenenfalls gewünschter zusätzlicher Signale möglichst die Kompatibilität mit der bisher üblichen Anzahl an Signalübertragungsleitungen gewährleistet bleiben.
Aus der EP 0 660 209 A1 der Anmelderin ist nunmehr eine Positionsmeßeinrichtung bekannt, die u.a. eine beschreib- und wiederauslesbare Speichereinheit umfaßt. Die Speichereinheit dient insbesondere zum Ablegen von systembezogenen Parametern, die der Positionsmeßeinrichtung beispielsweise von der nachgeordneten Auswerteeinheit übergeben werden können. Beim Auslesen der Speichereinheit wiederum werden bestimmte systembezogene Parameter von der Positionsmeßeinrichtung an die Auswerteeinheit übergeben. Bei den in der Speichereinheit ablegbaren und wiederauslesbaren systembezogenen Parametern handelt es sich um Parameter des Gesamtsystems, beispielsweise bestehend aus Auswerteeinheit, Werkzeugmaschine und Positionsmeßeinrichtung, wenn die entsprechende Positionsmeßeinrichtung an einer Werkzeugmaschine eingesetzt wird. Im einzelnen kann dies etwa die Angabe des Meßsystem-Typs, die Breite der Signalperiode, Angaben zu den Meßschritten der Positionsmeßeinrichtung, Form der gelieferten Ausgangssignale, Referenzsignal-Informationen, Werkzeugmaschinenparameter, Korrekturwerte für die erzeugten Signale u.v.m. sein.
Mit Hilfe einer derartigen Speichereinheit auf Seiten der Positionsmeßeinrichtung ist es nunmehr beispielsweise möglich, vor dem eigentlichen Meßbetrieb, die Positionsmeßeinrichtung geeignet zu programmieren, indem bestimmte Parameter in der Speichereinheit abgeändert werden. Andererseits kann dabei auch die eingesetzte Auswerteeinheit an das vorhandene Gesamtsystem angepaßt werden, indem bestimmte Parameter von der Speichereinheit an die Auswerteeinheit übergeben werden.
Für die bidirektionale Übertragung der systembezogenen Parameter zwischen der Positionsmeßeinrichtung und der nachgeordneten Auswerteeinheit kann etwa eine separate Signalübertragungsleitung vorgesehen werden. Damit vergrößert sich jedoch der vorher erwähnte Verkabelungsaufwand; zudem ist in diesem Fall auch die gewünschte Kompatibilität mit bisherigen Schnittstellen-Standards nicht mehr gegeben.

Aufgabe der vorliegenden Erfindung ist es daher, bei Positionsmeßeinrichtungen mit einer beschreib- und auslesbaren Speichereinheit und einer vorgesehenen Übertragung von systembezogenen Parametern von und zu einer Auswerteeinheit den Aufwand bezüglich der erforderlichen Signalverbindungen möglichst gering zu halten. Insbesondere wird auch bei der möglichen Übertragung derartiger systembezogener Parameter die Kompatibilität mit den bisherigen Schnittstellen gewünscht.

Diese Aufgabe wird gelöst durch ein Verfahren bzw. eine Vorrichtung mit den Merkmalen der Ansprüche 1 bzw. 9.

Vorteilhafte Ausführungsformen des erfindungsgemäßen Verfahrens bzw. der erfindungsgemäßen Vorrichtung ergeben sich in Verbindung mit den Maßnahmen in den jeweils abhängigen Ansprüchen.

Erfindungsgemäß ist nunmehr vorgesehen, die systembezogenen Parameter nicht auf einer separaten Signalübertragungsleitung zwischen der Positionsmeßeinrichtung und der Auswerteeinheit zu übertragen, sondern zu diesem Zweck mindestens eine, bereits vorhandene Versorgungsleitung zwischen der Positionsmeßeinrichtung und der Auswerteeinheit zu nutzen. Eine andernfalls erforderliche Signalübertragungsleitung und der entsprechende Mehraufwand erübrigen sich demzufolge. Über die erfindungsgemäßen Maßnahmen ist vielmehr sichergestellt, daß mit den bereits üblicherweise vorhandenen Verbindungen zwischen Positionsmeßeinrichtung und Auswerteeinheit eine sichere bidirektionale Übertragung systembezogener Parameter möglich ist.

Die Übertragung von inkrementalen Positionsinformationen auf einer Versorgungsleitung zwischen einer Positionsmeßeinrichtung und einer Auswerteeinheit ist aus der DE 195 04 822 bekannt. Hinweise auf die möglichst sichere Übertragung von systembezogenen Parametern sind diesem Dokument jedoch ebensowenig zu entnehmen, wie Details zur Ausgestaltung einer entsprechenden Vorrichtung bzw. eines entsprechenden Verfahrens.

Bezüglich der konkreten Ausführungsform der erfindungsgemäßen Vorrichtung bzw. des erfindungsgemäßen Verfahrens ergeben sich eine Reihe von Möglichkeiten, insbesondere bezüglich der Art und Weise der Übertragung der systembezogenen Daten auf der Versorgungsleitung. Es existieren somit eine Reihe von Möglichkeiten zur Anpassung der erfindungsgemäßen Vorrichtung bzw. des erfindungsgemäßen Verfahrens an die jeweiligen Gegebenheiten.

Weitere Vorteile, Einzelheiten sowie mögliche Ausführungsformen des erfindungsgemäßen Verfahrens bzw. der erfindungsgemäßen Vorrichtung ergeben sich aus der nachfolgenden Beschreibung eines Ausführungsbeispieles anhand der beiliegenden Figur. In schematisierter Form ist dabei ein Blockschaltbild einer möglichen Ausführungsform der erfindungsgemäßen Vorrichtung dargestellt.

Die gezeigte Positonsmeßeinrichtung 1 umfaßt eine Maßstabteilung 1 sowie eine relativ dazu bewegliche Abtasteinheit 3. Die von der Positionsmeßeinrichtung 1 erzeugten Positionsdaten werden an eine nachgeordnete Auswerteeinheit 6 zur Weiterverarbeitung übertragen. Die Maßstabteilung 2 und die Abtasteinheit 3 sind beispielsweise mit zueinander beweglichen Teilen einer Werkzeugmaschine verbunden, deren Relativposition zueinander bestimmt werden soll. Als Auswerteeinheit 6 dient in diesem Fall eine bekannte numerische Werkzeugmaschinensteuerung.
Neben dem schematisiert dargestellten Ausführungsbeispiel zur Erfassung von Linearbewegungen können selbstverständlich auch Positionsmeßeinrichtungen erfindungsgemäß ausgestaltet werden, die rotatorische Bewegungen erfassen.

Bei der Relativbewegung von Maßstabteilung 2 und Abtasteinheit 3 werden über eine schematisiert angedeutete Signalerzeugungseinheit 4 positionsbezogene Abtastsignale erzeugt. Bei den erzeugten Daten kann es sich dabei um verschiedenste Arten von Positionsdaten handeln, beispielsweise inkrementale Positionsdaten, absolute Positionsdaten oder entsprechende Kombinationen hiervon etc..
Die Erzeugung der unterschiedlichen Arten an Positionsdaten kann dabei ebenso auf verschiedenartigste Art und Weise erfolgen. Das heißt, es können zu diesem Zweck bekannte optische, magnetische, induktive oder kapazitive Abtastprinzipien eingesetzt werden.
Im Fall der Erzeugung von inkrementalen Positionsdaten auf Basis einer optischen Abtastung kann etwa eine reflektierend ausgebildete Maßstabteilung 2 vorgesehen werden. Die Signalerzeugungseinheit 4 der Abtasteinheit 3 wiederum umfaßt mehrere Lichtquellen, Abtaststrukturen sowie optoelektronische Detektorelemente.
Absolute Positionsdaten wiederum können hingegen über die ebenfalls bekannte optische Auflichtabtastung einer Codescheibe erzeugt werden. Alternativ hierzu kann aber auch eine Signalerzeugungseinheit 4 zu diesem Zweck eingesetzt werden, die über den Meßbereich eine einzige Signalperiode liefert und auf diesem Weg eine Bestimmung absoluter Positionsdaten ermöglicht usw..
Aufgrund der vielfältigen Ausführungsmöglichkeiten hinsichtlich der Erzeugung von Positionsdaten sind in der Figur keine weiteren Details der Signalerzeugungseinheit 4 dargestellt, sondern dieselbe lediglich schematisch angedeutet. Selbstverständlich können dabei wie erwähnt auch mehrere der verschiedenen Möglichkeiten zur Erzeugung von Positionsdaten in Kombination miteinander eingesetzt werden, d.h. auch diesbezüglich bestehen mehrere Möglichkeiten, die Signalerzeugungseinheit 4 entsprechend auszubilden oder ggf. mehrere unterschiedliche Signalerzeugungseinheiten vorzusehen.

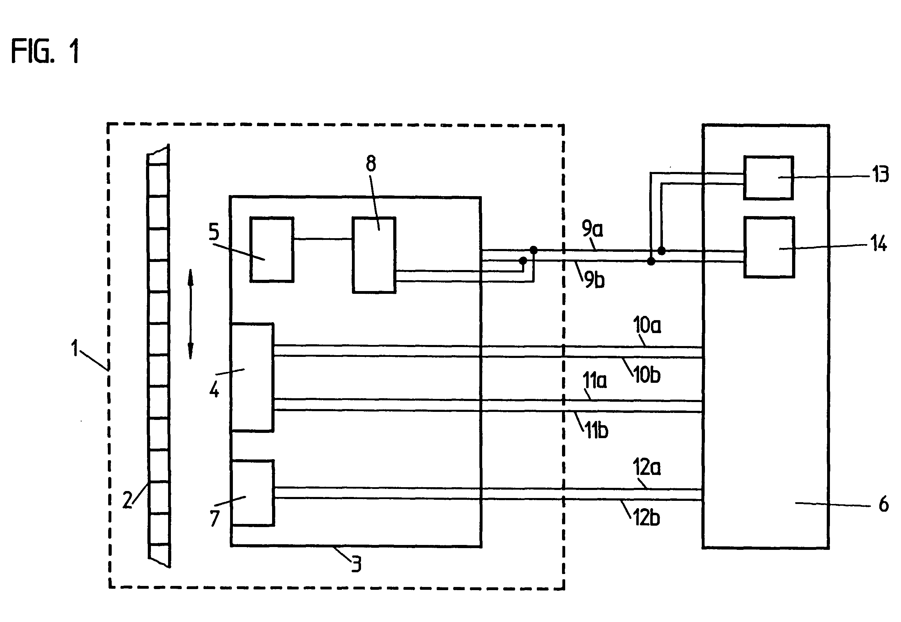

Die im dargestellten Ausführungsbeispiel von der Signalerzeugungseinheit 4 generierten inkrementalen Positionsdaten werden über insgesamt vier Signalübertragungsleitungen 10a, 10b, 11a, 11b in paralleler Form an die nachgeordnete Auswerteeinheit 6 übertragen. Die Signalerzeugungseinheit 4 liefert im Fall der inkrementalen Positionsdaten bei der Relativbewegung von Maßstabteilung 2 und Abtasteinheit 3 demzufolge zumindest zwei um 90° phasenversetzte Abtastsignale. Zu jedem der beiden Abtastsignale liegt desweiteren ein invertiertes, d.h. um 180° phasenversetztes Signal vor, das ebenfalls zur Weiterverarbeitung über die Signalübertragungsleitungen 10a, 10b, 11a, 11b an die Auswerteeinheit 6 übertragen wird.
In der schematisierten Darstellung der Figur 1 ist auf Seiten der Abtasteinheit 3 bzw. Positionsmeßeinrichtung 1 desweiteren eine zweite Signalerzeugungseinheit 7 angedeutet. Über diese erfolgt die Erzeugung eines Referenzimpulssignales in bekannter Art und Weise bei ein oder mehreren definiert-bekannten Relativpositionen von Maßstabteilung 2 und Abtasteinheit 3. Die von der zweiten Signalerzeugungseinheit 7 generierten Referenzimpulssignale werden über ein weiteres Paar von Signalübertragungsleitungen 12a, 12b an die Auswerteeinheit 6 übergeben und dort weiterverarbeitet. Hierbei ist wie bei den anderen Signalen ebenfalls eine Übertragung von zueinander invertierten Signalen auf den beiden Signalübertragungsleitungen 12a, 12b vorgesehen. Das heißt, es werden neben dem eigentlichen Referenzimpulssignal auch die hierzu um 180° phasenversetzten Signale übertragen. Hinsichtlich der erfindungswesentlichen Maßnahmen bezüglich der Übertragung der systembezogenen Parameter auf den Versorgungsleitungen 9a, 9b spielt die Übertragung des Referenzimpulssignales bzw. die Art und Weise der Übertragung jedoch keine weitere Rolle, sondern sollte lediglich im Zusammenhang mit möglichen Ausführungsformen der erfindungsgemäßen Vorrichtung bzw. des erfindungsgemäßen Verfahrens erwähnt werden.

Neben den bislang erläuterten Signalerzeugungseinheiten 4, 7 umfaßt die dargestellte Positionsmeßeinrichtung 1 desweiteren eine auslesbare und beschreibbare Speichereinheit 5. In dieser Speichereinheit 5 können verschiedenste systembezogene Parameter sowohl abgelegt als auch wieder ausgelesen werden. Daneben können darin abgelegte Parameter selbstverständlich auch geändert werden, wobei jedoch auch die Möglichkeit gegeben ist, bestimmte Parameter nur über eine entsprechende Autorisierung verändern zu lassen. So ist es möglich, die Speichereinheit 5 in mehrere Bereiche mit unterschiedlichen Zugriffsrechten aufzuteilen; während ein erster Speicherbereich nur für den jeweiligen Hersteller der Positionsmeßeinrichtung zugänglich ist, kann ein zweiter Speicherbereich auch vom Anwender beschrieben und ausgelesen werden usw.. In einer möglichen Ausführungsform ist die Speichereinheit 5 etwa als EPROM in bekannter Art und Weise ausgebildet.
Bei den in der Speichereinheit 5 ablegbaren, veränderbaren und wiederauslesbaren systembezogenen Parametern kann es sich beispielsweise um charakteristische Parameter der Positionsmeßeinrichtung handeln, die vom jeweiligen Hersteller vorgegeben werden, wie etwa Angaben zur jeweiligen Organisation der Speichereinheit 5, Art der Positionsmeßeinrichtung, Angaben zur Signalperiode und den Meßschritten, Lage der Referenzmarken etc.. Daneben können in der Speichereinheit 5 auch Parameter durch den Anwender verändert oder aber neu eingeschrieben werden, die für den geplanten Meßbetrieb von Bedeutung sind, wie etwa Angaben zur Nullpunktslage. Desweiteren können in der Speichereinheit 5 auch Korrekturwerte abgelegt werden, mit denen die erzeugten Signale beaufschlagt werden, um mögliche Signalfehler zu kompensieren. Hinsichtlich weiterer systembezogener Parameter sei darüberhinaus auf die bereits erwähnte EP 0 660 209 der Anmelderin verwieden.

Ein derartiges Verändern, Einschreiben oder Auslesen der systembezogenen Parameter der Positionsmeßeinrichtung 1 wird vor dem eigentlichen Meßbetrieb vorgenommen, d.h. eine entsprechende Übertragung der zugehörigen Signale ist in der Regel lediglich zeitweise erforderlich. Ansonsten kann ein derartiges Vorgehen etwa im Fehlerfall zu Diagnosezwecken ggf. nötig sein.

Sowohl das Verändern, Einschreiben oder Auslesen der systembezogenen Parameter erfolgt über die nachgeordnete Auswerteeinheit 6, wozu eine entsprechende Signalverbindung mit der Speichereinheit 5 erforderlich ist. Erfindungsgemäß wird nunmehr zumindest eine der vorhandenen Versorgungsleitungen 9a, 9b zu diesem Zweck genutzt, über die ansonsten die Strom- und Spannungsversorgung der Positionsmeßeinrichtung 1 bzw. der entsprechenden Bauelemente wie Lichtquellen, Detektorelemente etc. erfolgt. Auf Seiten der Auswerteeinheit 6 ist zu diesem Zweck eine Strom- und Spannungsversorgungseinheit 14 vorgesehen, wobei diese jedoch keineswegs in die Auswerteeinheit 6 integriert sein muß.

Die Kommunikation zwischen der Auswerteeinheit 6 und der Positionsmeßeinrichtung 1 bzw. der Speichereinheit 5 über die Versorgungsleitungen 9a, 9b kann dabei in beide Richtungen erfolgen, d.h. bidirektional ausgelegt sein. Es ist damit sowohl ein Auslesen als auch ein Verändern bzw. Einschreiben von systembezogenen Parametern in die Speichereinheit 5 in serieller Form gewährleistet. Zur Übertragung der verschiedenartigsten systembezogenen Daten auf mindestens einer der zur Verfügung stehenden Versorgungsleitungen 9a, 9b ist sendeseitig jeweils eine Aufbereitung in Form einer Modulation der zu übertragenden Daten bzw. Parameter vorgesehen, während empfangsseitig eine entsprechende Separation bzw. Demodulation der übertragenen Signale von der jeweiligen Versorgungsleitung 9a, 9b erforderlich ist. Zu diesem Zweck sind im Fall der bidirektionalen seriellen Übertragung von systembezogenen Parametern sowohl auf Seiten der Positionsmeßeinrichtung 1 als auch auf Seiten der Auswerteeinheit 6 Modulator/Demodulatoreinheiten 8, 13 angeordnet, die diese Aufgaben übernehmen. Während demzufolge eine entsprechende Modulatorstufe einer derartigen Einheit die systembezogenen Parameter zum Senden aufbereitet, separiert die jeweilige Demodulatorstufe diese

Daten respektive Parameter von der Versorgungsleitung 9a, 9b. Wenngleich die Modulator/Demodulatoreinheiten 8, 13 in der Darstellung von Figur 1 lediglich in schematisierter Form als kombinierte Einheiten gezeigt sind, ist es selbstverständlich möglich, separate Einheiten zur Modulation bzw. Demodulation der übertragenen Daten vorzusehen.

Zur Übertragung der verschiedenen systembezogenen Parameter können dabei die verschiedensten bekannten Modulationsverfahren eingesetzt werden.

In der gezeigten Ausführungsform werden zur Übertragung der systembezogenen Parameter die zwei vorhandenen Versorgungsleitungen 9a, 9b der Gleichspannnungs-Versorgung genutzt. Während auf einer der beiden Versorgungsleitungen 9a, 9b die systembezogenen Parameter in modulierter Form übertragen werden, erfolgt auf der jeweils anderen Versorgungsleitung 9a, 9b eine Übertragung der hierzu invertierten, d.h. um 180° phasenversetzten Signale.
Neben dieser Möglichkeit der zusätzlichen Übertragung auch der invertierten Signale bestehen selbstverständlich auch andere Möglichkeiten der Übertragung systembezogenen Parameter. Beispielsweise könnte im Fall zweier vorhandener Versorgungsleitungen 9a, 9b im Fall der Gleichspannungsversorgung der Positionsmeßeinrichtung 1 jede der beiden Versorgungsleitungen 9a, 9b für die Übertragung in eine Richtung genutzt werden etc..

Neben den bislang erläuterten Maßnahmen erweist es sich desweiteren als vorteilhaft, über geeignet angeordnete Filterelemente in den Versorgungsleitungen 9a, 9b zu verhindern, daß die aufmodulierten Signale die Strom- bzw. Spannungsversorgung der Positionsmeßeinrichtung 1 und/oder die Auswerteeinheit 6 stören. Hierzu können vor den entsprechenden Elementen, die auf beiden Seiten mit den Versorgungsleitungen 9a, 9b verbunden sind entsprechende Filterelemente angeordnet werden.

Aufgrund der erfindungsgemäßen Maßnahmen ist nunmehr die Übertragung von systembezogenen Parametern unter Nutzung mindestens einer der vorhandenen Versorgungsleitungen möglich, d.h. es resultiert kein zusätzlicher Verkabelungsaufwand. Zudem ist die Kompatibilität mit der Anzahl bisheriger Verbindungen zwischen der Positionsmeßeinrichtung 1 und Auswerteeinheit 6 gewährleistet.

## Patentansprüche

1. Verfahren zur Übertragung von Daten zwischen einer Positionsmeßeinrichtung (1) und einer Auswerteeinheit (6),
- wobei zumindest zeitweise auch eine bidirektionale serielle Übertragung von systembezogenen Parametern zwischen der Positionsmeßeinrichtung (1) und der Auswerteeinrichtung (6) auf mindestens einer Versorgungsleitung (9a, 9b) erfolgt und die verschiedenen systembezogenen Parameter vor dem Meßbetrieb in einer Speichereinheit (5) der Positionsmeßeinrichtung (1) abgelegt und daraus ausgelesen werden und
- die generierten Positionsdaten im Meßbetrieb von der Positionsmeßeinrichtung (1) über mehrere Signalübertragungsleitungen (10a, 10b, 11a, 11b) an die nachgeordnete Auswerteeinheit (6) übertragen werden.

2. Verfahren nach Anspruch 1, wobei die systembezogenen Parameter auf der Versorgungsleitung (9a, 9b) bidirektional übertragbar sind.

3. Verfahren nach Anspruch 2, wobei auf zwei Versorgungsleitungen (9a, 9b) invertierte Signale übertragen werden.

4. Verfahren nach Anspruch 1, wobei zur bidirektionalen Übertragung zwei Versorgungsleitungen (9ä, 9b) genutzt werden und zur Übertragung in unterschiedliche Richtungen unterschiedliche Versorgungsleitungen (9a, 9b) verwendet werden.

5. Verfahren nach Anspruch 1, wobei inkrementale Positionsdaten auf vier parallelen Signalübertragungsleitungen (10b, 10b, 11a, 11 b) an die Auswerteeinheit übertragen werden.

6. Verfahren nach Anspruch 1, wobei auf Seiten der Auswerteeinheit (6) bestimmte systembezogene Parameter für den nachfolgenden Meßbetrieb der Positionsmeßeinrichtung (1) selektiert, für die Übertragung auf der Versorgungsleitung (9a, 9b) aufbereitet und anschließend an die Positionsmeßeinrichtung (1) übertragen werden.

7. Verfahren nach Anspruch 1, wobei eine Aufbereitung der zu übertragenden systembezogenen Parameter als auch eine Trennung der übertragenen Systemparameter von der Versorgungsleitung (9a, 9b) auf Seiten der Positionsmeßeinrichtung (1) und/oder auf Seiten der Auswerteeinheit (6) jeweils über eine Modulator/Demodulator-Einheit (8, 14) erfolgt.

8. Verfahren nach Anspruch 1, wobei als systembezogene Parameter charakteristische Parameter der Positionsmesseinrichtung übertragen werden.

9. Vorrichtung zur Übertragung von Daten zwischen einer Positionsmeßeinrichtung (1) und einer Auswerteeinheit (6), wobei
- zumindest zeitweise auch eine bidirektionale serielle Übertragung von systembezogenen Parametern zwischen der Positionsmeßeinrichtung (1) und der Auswerteeinrichtung (6) auf mindestens einer Versorgungsleitung (9a, 9b) erfolgt, wozu auf Seiten der Positionsmeßeinrichtung (1) und/oder auf Seiten der Auswerteeinheit (6) eine Modulator/Demodulator-Einheit (8, 14) zur Aufbereitung der zu übertragenden systembezogenen Parameter und zur Entkopplung der übertragenen systembezogenen Parameter von der Versorgungsleitung (9a, 9b) angeordnet ist und die Positionsmeßeinrichtung (1) eine Speichereinheit (5) umfaßt, in die systembezogene Parameter vor dem Meßbetrieb einschreibbar und auslesbar sind und
- die Positionsmeßeinrichtung (1) und die Auswerteeinheit (6) über mehere Signalübertragungsleitungen (10a, 10b, 11a, 11b) miteinander verbunden sind, über die eine Übertragung der generierten Positionsdaten im Meßbetrieb erfolgt.

10. Vorrichtung nach Anspruch 9, wobei auf Seiten der Positionsmeßeinrichtung (1) und/oder auf Seiten der Auswerteeinheit (6) Filterelemente vor Bauelementen angeordnet sind, die mit der Versorgungsleitung (9a, 9b) verbunden sind, auf der eine Übertragung der systembezogenen Parameter erfolgt.

11. Vorrichtung nach Anspruch 9, wobei zwischen der Positionsmeßeinrichtung (1) und der Auswerteeinheit (6) mindestens zwei Signal-Übertragungsleitungen (10a, 11a) angeordnet sind, auf denen zwei phasenversetzte Inkrementalsignale von der Positionsmeßeinrichtung (1) zur Auswerteinheit (6) übertragbar sind.

12. Vorrichtung nach Anspruch 11, wobei zwischen der Positionsmeßeinrichtung (1) und der Auswerteeinheit (6) zwei Signal-Übertragungsleitungen (10a, 11b) angeordnet sind, auf denen zwei phasenversetzte Inkrementalsignale von der Positionsmeßeinrichtung zur Auswerteeinheit übertragbar sind sowie zwei weitere Signalübertragungsleitungen (10b, 11b), auf denen invertierte Signale zu den erstgenannten Inkrementalsignalen übertragbar sind.

13. Vorrichtung nach Anspruch 9, wobei desweiteren zwei Signal-Übertragungsleitungen (12a, 12b) zwischen der Positionsmeßeinrichtung (1) und der Auswerteeinheit (6) angeordnet sind, auf denen Referenzimpulssignale sowie hierzu invertierte Signale übertragbar sind.

## Claims

1. Method for transmission of data between a position measuring device (1) and an evaluation unit (6), wherein
- at least at times also a bidirectional, serial transmission of system-related parameters between the position measuring device (1) and the evaluation unit (6) is effected on at least one supply line (9a, 9b) and the different system-related parameters, prior to the measuring operation, are stored in a memory unit (5) of the position measuring device (1) and read out therefrom, and
- the generated position data are transmitted in the measuring operation from the position measuring device (1) via a plurality of signal transmission lines (10a, 10b, 11a, 11b) to the subsequently disposed evaluation unit (6).

2. Method according to claim 1, wherein the system-related parameters are able to be transmitted bidirectionally on the supply line (9a, 9b).

3. Method according to claim 2, wherein inverted signals are transmitted on two supply lines (9a, 9b).

4. Method according to claim 1, wherein two supply lines (9a, 9b) are used for bidirectional transmission and, for transmission in different directions, different supply lines (9a, 9b) are used.

5. Method according to claim 1, wherein incremental position data are transmitted to the evaluation unit on four parallel signal transmission lines (10a, 10b, 11a, 11b).

6. Method according to claim 1, wherein, on the part of the evaluation unit (6), specific system-related parameters for the subsequent measuring operation of the position measuring device (1) are selected, are processed for transmission on the supply line (9a, 9b) and subsequently are transmitted to the position measuring device (1).

7. Method according to claim 1, wherein processing of the system-related parameters to be transmitted and also a separation of the transmitted system parameters from the supply line (9a, 9b) on the part of the position measuring device (1) and/or on the part of the evaluation unit (6) is effected respectively via a modulator/demodulator unit (8, 14).

8. Method according to claim 1, wherein characteristic parameters of the position measuring device are transmitted as system-related parameters.

9. Device for transmission of data between a position measuring device (1) and an evaluation unit (6), wherein
- at least at times also a bidirectional, serial transmission of system-related parameters between the position measuring device (1) and the evaluation unit (6) is effected on at least one supply line (9a, 9b), for which purpose, on the part of the position measuring device (1) and/or on the part of the evaluation unit (6), a modulator/demodulator unit (8, 14) for processing the system-related parameters to be transmitted and for decoupling the transmitted system-related parameters from the supply line (9a, 9b) is disposed, and the position measuring device (1) comprises a memory unit (5), in which system-related parameters can be written in and read out prior to the measuring operation, and
- the position measuring device (1) and the evaluation unit (6) are connected to each other via a plurality of signal transmission lines (10a, 10b, 11a, 11b), via which a transmission of the generated position data is effected in the measuring operation.

10. Device according to claim 9, wherein, on the part of the position measuring device (1) and/or on the part of the evaluation unit (6), filter elements are disposed in front of components which are connected to the supply line (9a, 9b), on which line a transmission of the system-related parameters is effected.

11. Device according to claim 9, wherein at least two signal transmission lines (10a, 11a) are disposed between the position measuring device (1) and the evaluation unit (6), on which signal transmission lines two phase-shifted incremental signals can be transmitted from the position measuring device (1) to the evaluation unit (6).

12. Device according to claim 11, wherein two signal transmission lines (10a, 11b) are disposed between the position measuring device (1) and the evaluation unit (6), on which signal transmission lines two phase-shifted incremental signals can be transmitted from the position measuring device to the evaluation unit and also two further signal transmission lines (10b, 11b), on which signals inverted relative to the first-mentioned incremental signals can be transmitted.

13. Device according to claim 9, wherein furthermore two signal transmission lines (12a, 12b) are disposed between the position measuring device (1) and the evaluation unit (6), on which signal transmission lines reference pulse signals and also signals which are inverted relative thereto can be transmitted.

## Revendications

1. Méthode pour la transmission de données entre un appareil de mesure de position (1) et une unité de traitement (6) **caractérisée en ce que** :
- au moins de temps en temps a lieu aussi une transmission bidirectionnelle en série de paramètres de référence du système entre l'appareil de mesure de position (1) et l'unité de traitement (6) sur au moins un conducteur d'alimentation (9a, 9b), les différents paramètres de référence du système étant, avant l'opération de mesure, déposés dans une unité de mémoire (5) de l'appareil de mesure de position (1) et lus dans cette unité,
- les données de position générées par l'appareil de mesure de position (1) pendant son fonctionnement sont transmises par plusieurs conducteurs de transmission de signaux (10a, 10b, 11a, 11b) à l'unité de traitement (6) située en aval.

2. Méthode selon la revendication 1, **caractérisée en ce que** les paramètres de référence du système peuvent être transmis bidirectionnellement sur le conducteur d'alimentation (9a, 9b).

3. Méthode selon la revendication 2, **caractérisée en ce que** des signaux inversés sont transmis sur deux conducteurs d'alimentation (9a, 9b).

4. Méthode selon la revendication 1, **caractérisée en ce que** deux conducteurs d'alimentation (9a, 9b) sont utilisés pour la transmission bidirectionnelle et, pour la transmission dans des sens différents, sont utilisés des conducteurs d'alimentation différents (9a, 9b).

5. Méthode selon la revendication 1, **caractérisée en ce que** des données de position incrémentielles sont transmises à l'unité de traitement sur quatre conducteurs de transmission de signaux (10a, 10b, 11a, 11b) montés en parallèle.

6. Méthode selon la revendication 1, **caractérisée en ce que** du côté de l'unité de traitement (6), les paramètres de référence du système sont sélectionnés pour l'opération de mesure suivante du dispositif de mesure de position (1), mis en forme pour la transmission sur le conducteur d'alimentation (9a, 9b) et ensuite transmis à l'appareil de mesure de position (1).

7. Méthode selon la revendication 1, **caractérisée en ce que** s'effectuent une mise en forme des paramètres de référence du système à transmettre ainsi qu'une séparation par le conducteur d'alimentation (9a, 9b) des paramètres du système transmis du côté de l'appareil de mesure de position (1) et/ou du côté de l'unité de traitement (6) chaque fois par un ensemble modulateur/démodulateur (8, 14).

8. Méthode selon la revendication 1, **caractérisée en ce que** des paramètres caractéristiques de l'appareil de mesure de position sont transmis en tant que paramètres de référence du système.

9. Dispositif pour la transmission de données entre un appareil de mesure de position (1) et une unité de traitement (6), **caractérisé en ce que**
- au moins de temps en temps a lieu une transmission bidirectionnelle en série de paramètres de référence du système entre l'appareil de mesure de position (1) et l'unité de traitement (6) sur au moins un conducteur d'alimentation (9a, 9b), et pour cela du côté de l'appareil de mesure de position (1) et/ou du côté de l'unité de traitement (6) est disposé un ensemble modulateur/démodulateur (8,14) pour mettre en forme des paramètres de référence du système à transmettre, et pour découpler du conducteur d'alimentation (9a, 9b) les paramètres de référence du système transmis, l'appareil de mesure de position (1) comprenant une unité de mémorisation (5) dans laquelle les paramètres de référence du système peuvent être inscrits et lus avant l'opération de mesure et
- l'appareil de mesure de position (1) et l'unité de traitement (6) sont reliés par plusieurs conducteurs de transmission de signaux (10a, 10b, 11a, 11b) qui assurent une transmission des données de position générées pendant l'opération de mesure.

10. Dispositif selon la revendication 9, **caractérisé en ce que** du côté de l'appareil de mesure de position (1) et/ou du côté de l'unité de traitement (6), en amont des éléments constructifs, sont disposés des éléments filtrants qui sont reliés au conducteur d'alimentation (9a, 9b) sur lequel a lieu une transmission des paramètres de référence du système.

11. Dispositif selon la revendication 9, **caractérisé en ce qu'**entre l'appareil de mesure de position (1) et l'unité de traitement (6) sont disposés au moins deux conducteurs de transmission de signaux (10a, 11a) sur lesquels peuvent être transmis de l'appareil de mesure de position (1) à l'unité de traitement (6), deux signaux incrémentiels déphasés.

12. Dispositif selon la revendication 11, **caractérisé en ce qu'**entre l'appareil de mesure de position (1) et l'unité de traitement (6) sont disposés au moins deux conducteurs de transmission de signaux (10a, 11a) sur lesquels peuvent être transmis de l'appareil de mesure de position (1) à l'unité de traitement (6) deux signaux incrémentiels déphasés, ainsi que deux autres conducteurs de transmission de signaux (10b, 11b) sur lesquels peuvent être transmis des signaux inversés par rapport aux signaux incrémentiels cités en premier.

13. Dispositif selon la revendication 9, **caractérisé en ce que** de plus, entre l'appareil de mesure de position (1) et l'unité de traitement (6) sont disposés deux conducteurs de transmission de signaux (12a, 12b) sur lesquels peuvent être transmis des signaux pulsés de référence ainsi que des signaux inversés par rapport à ceux-ci.
